# EUROPÄISCHE PATENTANMELDUNG

(11) **EP 1 155 938 A2**
(43) Veröffentlichungstag der Anmeldung: **21.11.2001**
(21) Anmeldenummer: 01110345.4
(22) Anmeldetag: 26.04.2001
(51) Int. Cl.: B62B 9/04

(54) **Kinderwagen**

(30) Priorität: 17.05.2000 DE 10024163
(71) Anmelder: Fendt, Peter, 87616 Marktoberdorf (DE)
(72) Erfinder: Fendt, Peter, 87616 Marktoberdorf (DE)
(74) Vertreter: Kuhnen & Wacker

(57) **Zusammenfassung**

Die Erfindung schafft einen Kinderwagen (1), der wenigstens eine Gleitkufe (6) aufweist, welche vom Radumfang aus in Richtung einer Schubstange (4) in einem Winkel von der Aufstandsfläche erstreckend angeordnet ist. Die Gleitkufe (6) ist in ihrer Betriebsstellung in einem vorbestimmten Winkel (α) am Kinderwagen (1) gehalten und befindet sich in dieser geneigten Stellung vollständig oberhalb der Aufstandsfläche des Kinderwagens (1). Mit einem so ausgebildeten Kinderwagen (1) ist ein gefahrloses Überwinden von Stufen möglich, wobei das optische Erscheinungsbild des Kinderwagens (1) zudem nicht wesentlich durch Anbauten beeinträchtigt wird.

## Beschreibung

Die Erfindung betrifft einen Kinderwagen nach dem Oberbegriff des Anspruchs 1.

Es erweist sich im Alltag oftmals schwierig, Kinderwägen oder dergleichen eine Treppe hinauf oder hinunter zu bewegen, da einerseits das Kind vor Erschütterungen geschützt werden soll und andererseits erhebliche Gewichtskräfte wirken. Hierbei ist insbesondere bei längeren Treppenabschnitten die Gefahr einer Erlahmung der Kräfte gegeben. Daher wird hierzu häufig eine Hilfsperson zum Hinauf- oder Hinabtragen des Kinderwagens herangezogen, wobei diese jedoch nicht immer zur Verfügung steht.

Um diesem Problem zu begegnen sind in der Praxis Bauweisen bekannt, welche voneinander beabstandete Gleitschienen aufweisen. Diese Gleitschienen überbrücken den Freiraum zwischen den üblicherweise gegebenen zwei Achsen des Kinderwagens und ragen zumeist auch über die beiden Enden des Kinderwagens hinaus. Dabei sind sie in der Ruhestellung hochgestellt, so daß sie die Funktion der Räder nicht beeinträchtigen. Gelangt nun die den Kinderwagen führende Person zu einer Treppe, so können diese Gleitschienen derart in eine zur Ruhestellung parallele Betriebsstellung abgeklappt werden, daß die Räder außer Eingriff mit dem Untergrund gelangen und eine gleitende Fortbewegung des Kinderwagens möglich wird. Damit ist eine ruckfreie Überwindung von Treppenstufen, Bordsteinkanten etc. möglich, wobei die Gleitschienen hierbei wenigstens in einer derartigen Länge ausgebildet sind, daß sie zumindest drei Stufen überbrücken können.

Diese Bauweise hat sich jedoch in der Praxis kaum durchgesetzt, weil sich der Kinderwagen insgesamt automatisch in die Neigung der Treppe einstellt, das heißt, das darin befindliche Kind in einer schrägen Lage zu liegen kommt, was Unannehmlichkeiten wie ein unerwünschtes Erwachen oder ein Unwohlsein des Kindes hervorrufen kann. Darüber hinaus wird dieser Lösungsansatz häufig auch deswegen abgelehnt, weil hierbei der Kinderwagen der führenden Person entgleiten und somit ungebremst eine Treppe hinabrutschen könnte. Zudem haben sich die erforderlichen Anbauten als sehr groß erwiesen, so daß dadurch der Bewegungsfreiraum für die den Kinderwagen führende Person eingeschränkt ist. Ferner sind diese Anbauten auch dem optischen Erscheinungsbild des Kinderwagens abträglich.

Aus dem deutschen Gebrauchsmuster G 68 03 384 U ist eine Vorrichtung zum waagerechten Befördern von Kinderwägen über Treppen bekannt, die ein einseitiges Ausschwenken des Gleitschienenpaars dergestalt erlaubt, daß sich zwischen der Längserstreckungsrichtung der Gleitschienen und der durch die Auflagerpunkte der vier Räder des Kinderwagens definierten Aufstandsfläche ein Winkel einstellen läßt, der der Treppenneigung entspricht. Damit ist es möglich, den Kinderwagen in einer waagerechten Lage beizubehalten und dennoch ruckfrei eine Treppe hinauf oder hinab zu bewegen.

Jedoch hat sich auch dieser Lösungsansatz als nachteilig erwiesen. So ist der komplizierte Aufbau schwer zu handhaben und insbesondere ist es ein Problem, die Auslenkung der Gleitschienen am Beginn oder Ende einer Treppe einzustellen und gleichzeitig den Kinderwagen während des Einstellvorgangs sicher zu halten. Tatsächlich ist hierzu wiederum eine zweite Person erforderlich, um sicherzustellen, daß diese Umstellung am Kinderwagen gefahrlos durchgeführt werden kann.

Ferner zeigt die DE-OS 22 00 992 eine Hilfsvorrichtung zum Transport von Kinderwägen über Treppenstufen, welche Kufen mit einem linearen Mittelteil, einem lang hochgezogenen Endstück und einem kurz hochgebogenen Endstück aufweist. Diese Kufen sind über Lagerböcke und Tragarme mit der Achswelle eines Radpaars verbunden. Durch diese Ausgestaltungsweise mit Lagerböcken und Tragarmen wird erreicht, daß die Kufen im Normalfall nicht die Funktion der Räder beeinträchtigen, während sie beim Überwinden einer Treppe aufgrund der Auslenkung durch die Tragarme die Räder außer Eingriff mit dem Untergrund setzen und eine gleitende Bewegung des Kinderwagens zulassen. Hierbei schwenken die Kufen derart um die Lagerböcke, daß eine horizontale Lage des Kinderwagens beibehalten werden kann. Da die Kufen ferner eine Längenabmessung aufweisen, die eine gleichzeitige Überbrückung von drei Stufenkannten zuläßt, kann der Kinderwagen so unter Vermeidung stufenüberwindender Schrittbewegungen und damit ohne Stoßbewegungen über die Treppe befördert werden.

In der Praxis hat sich jedoch auch diese Ausgestaltungsweise als nachteilbehaftet erwiesen. So weisen die Kufen eine erhebliche Länge auf, mittels der sie wenigstens auf einer Seite deutlich über die Außenabmessungen des Kinderwagens hinausstehen, was als störend empfunden wird. Ferner besteht bei dieser Bauweise das Problem, daß der Kinderwagen durch manuellen Krafteinsatz in der Waagerechten gehalten werden muß, da die Kufen um die Lagerbockachsen frei schwenkbar sind. Insbesondere wird jedoch das nach Art eines "Hornschlittens" lang hochgezogene Endstück als störend und hinsichtlich der optischen Erscheinungsform sehr ungünstig angesehen. Daher konnte sich auch diese Bauweise nicht in der Praxis durchsetzen.

Der Erfindung liegt demgegenüber die Aufgabe zugrunde, einen Kinderwagen gemäß dem Oberbegriff des Anspruchs 1 derart weiterzubilden, daß damit ein gefahrloses Überwinden von Stufen möglich ist, ohne daß das optische Erscheinungsbild des Kinderwagens wesentlich durch Anbauten beeinträchtigt wird.

Diese Aufgabe wird durch einen Kinderwagen mit den Merkmalen des Anspruchs 1 gelöst.

So wurde erfindungsgemäß erstmals erkannt, daß es für ein zuverlässiges Überwinden von Stufen lediglich erforderlich ist, wenigstens eine Gleitkufe geneigt zur Aufstandsfläche des Kinderwagens zu halten und dabei vollständig oberhalb der Aufstandsfläche vorzusehen. Die wenigstens eine Gleitkufe gemäß der Erfindung kann daher wesentlich kürzer als die Kufen im Stand der Technik ausgebildet sein. Damit läßt sich auch eine Bauweise realisieren, in der die Gleitkufe in ihrer Betriebsstellung starr gehalten wird, ohne daß sie die Funktion der Räder des Kinderwagens beeinträchtigt.

Die erfindungsgemäße Ausgestaltungsweise erlaubt damit in konstruktiv erstaunlich einfacher Weise ein Hoch- oder Heruntergleiten des Kinderwagens über eine Stufe, wobei dies in einer im wesentlichen gleichmäßigen Bewegung möglich ist. Sofern hierbei eine größere Stufentiefe zu überwinden ist, wechselt sich diese Gleitbewegung mit einer Rollbewegung ab, wobei hier Stöße vermieden werden können, da die wenigstens eine Gleitkufe im wesentlichen tangential zur Lauffläche der Räder angeordnet ist. Dadurch läßt sich ein im wesentlichen stetiger Übergang zwischen einer Gleit- und einer Rollbewegung erzielen.

Ein weiterer wesentlicher Vorteil liegt zudem darin, daß der erfindungsgemäße Kinderwagen auch im Bereich einer Treppe alleine von einer einzelnen Person bewegt werden kann. Zudem ist es hierbei auch nicht erforderlich, die horizontale Ausrichtung des Kinderwagens während der Überwindung von Stufen aufzugeben. Da zudem Stöße im Bewegungsablauf erfindungsgemäß vermieden werden, tritt keine wesentliche Beeinträchtigung für das mitgeführte Kind auf.

Der erfindungsgemäße Kinderwagen zeichnet sich daher durch hohe Funktionalität wie auch durch eine konstruktiv sehr einfach gehaltene Bauweise aus. Er ist daher auch kostengünstig realisierbar. Zudem ist ein hohes Maß an Zuverlässigkeit erzielbar.

Vorteilhafte Weiterbildungen der Erfindung ergeben sich aus den Merkmalen der Unteransprüche.

So hat es sich in der Praxis als besonders vorteilhaft erwiesen, wenn die wenigstens eine Gleitkufe in der Betriebsstellung in einem Winkel im Bereich zwischen 20° und 60° am Kinderwagen gehalten ist. Damit lassen sich die in der Praxis am häufigsten auftretenden Bordsteinkantenhöhen oder Treppenbauformen gut überwinden. Wenn dabei die wenigstens eine Gleitkufe in einem Winkel von ca. 35° am Kinderwagen gehalten ist, können Stufenhöhen bis 160 mm besonders gut überwunden werden, wobei es hierbei nicht erforderlich ist, daß die Gleitkufe den Radumfang exakt tangiert. Bei einem Winkel von ca. 45° können insbesondere Stufen mit einer Höhe zwischen 160 mm und 200 mm gut überwunden werden. Generell läßt sich mit den genannten Winkelbereichen eine optimierte Funktionalität erzielen.

Ferner kann die wenigstens eine Gleitkufe eine Länge von wenigstens 250 mm aufweisen. Dieses Längenmaß bezieht sich dabei auf die wirksame Länge ausgehend vom äußeren Kufenende zur Normalen auf den Radkreismittelpunkt, d.h. dem Punkt, ab dem sich die Gleitkufe im wesentlichen tangential vom Radumfang erstreckt. Damit kann noch besser sichergestellt werden, daß die üblicherweise auftretenden Stufenhöhen überwunden werden können. Als besonders vorteilhaft hat sich hierbei ein Längenbereich zwischen 280 mm und 300 mm erwiesen.

Dadurch, daß die Räder durch eine Achsstange miteinander verbunden sind, wobei die wenigstens eine Gleitkufe mittels einer Tragvorrichtung an die Achsstange angekoppelt ist, läßt sich eine sehr einfache Bauweise realisieren. Insbesondere kann die wenigstens eine Gleitkufe mittels der Tragvorrichtung ohne großen Aufwand auch an bestehenden Kinderwägen nachgerüstet werden.

Wenn der Kinderwagen zweiachsig ausgebildet ist, wobei die Tragvorrichtung an beide Achsstangen angekoppelt ist, läßt sich die Stabilität der Anordnung weiter erhöhen. Dies beruht insbesondere darauf, daß sich so ein günstiger Hebelmechanismus ausbildet, mittels dem die wenigstens eine Gleitkufe an den beiden Achsstangen abgestützt werden kann.

Wenn die Tragvorrichtung dabei in unterschiedlichen Relativstellungen am Kinderwagen festlegbar ist, kann eine Anpassung an unterschiedliche Bauweisen von verschiedenen Kinderwagenherstellern erfolgen. Damit kann neben einem Achsabstand auch der Radumfang berücksichtigt werden, so daß die wenigstens eine Gleitkufe generell so positioniert werden kann, daß sie sich tangential vom Radumfang erstreckt. Darüber hinaus können auch Veränderungen des Achsabstands z.B. bei zusammenklappbaren Kinderwägen durchgeführt werden.

Von weiterem Vorteil ist es, wenn der Kinderwagen zwei beabstandete Gleitkufen aufweist. Dann berührt der Kinderwagen den Untergrund, das heißt die Stufenkante, wenigstens an zwei beabstandeten Stellen, so daß ein seitliches Wegkippen noch zuverlässiger vermieden werden kann. Wenn die freien Enden der Gleitkufen zudem durch einen Bügel verbunden sind, erhöht sich die Stabilität der Anordnung weiter.

Sofern an der wenigstens einen Gleitkufe ein Gleitstück angeordnet ist, welches an einer vorzugsweise metallenen Abstützung der Gleitkufe austauschbar befestigt ist, lassen sich die Gleiteigenschaften des Kinderwagens dauerhaft aufrecht erhalten. Zudem kann der Aufwand hierfür gering gehalten werden, da lediglich ein Verschleißteil, nämlich das Gleitstück, auszutauschen ist, während der restliche, vom Verschleiß im wesentlichen unberührte Aufbau nicht manipuliert werden muß.

Dadurch, daß das wenigstens eine Gleitstück zumindest im Bereich einer Gleitfläche aus einem verschleißfesten Kunststoff wie beispielsweise PTFE, PP, PA etc. ausgebildet ist, erleichtert sich die Handhabung des erfindungsgemäßen Kinderwagens weiter. Zudem ist ein Austausch der Verschleißteile damit in größeren Zeitabständen erforderlich, so daß sich der Wartungs- und Instandhaltungsaufwand weiter verringert.

In einer alternativen Bauweise ist es auch möglich, daß die der Aufstandsfläche zugewandte Seite der wenigstens einen Gleitkufe von einem Endlos-Laufriemen abgedeckt ist. Dann tritt der Gleiteffekt zwischen dem Endlos-Laufriemen und der Gleitkufenoberfläche auf, während der Laufriemen an der Stufenkante abläuft, daß heißt hier im wesentlichen keine Gleitbewegung auftritt. Da die Gleitkufe somit nicht unmittelbar durch äußere Einflüsse beaufschlagt wird, läßt sich hierdurch ein noch geringerer Verschleiß erzielen. Damit können ferner Abriebspuren wie schwarze Striemen etc. auf Stufenflächen und an Kanten vermieden werden, da es in diesem Bereich zu keiner gleitenden Bewegung kommt.

Hierbei ist es auch möglich, daß der Endlos-Laufriemen eine außenseitige Verzahnung aufweist, wodurch sich eine Gleitbewegung über dem Untergrund noch besser unterdrücken läßt.

Gemäß einer weiteren vorteilhaften Bauweise ist es zudem möglich, daß der Bügel als Halter für einen Rand eines vorzugsweise flexiblen Behältnisses dient. So kann in diesem Bereich auch eine Tasche, ein Gepäcknetz oder dergleichen angeordnet werden, wodurch sich der Nutzungskomfort des Kinderwagens weiter erhöht.

Von weiterem Vorteil ist es, wenn eine Standfläche im Bereich der freien Enden der Gleitkufen gelagert ist. Dann kann auf dieser Standfläche beispielsweise ein stehendes, etwas größeres Kind mitgenommen werden. Hierdurch läßt sich der Nutzungskomfort des erfindungsgemäßen Kinderwagens wesentlich erhöhen.

Dadurch, daß die wenigstens eine Gleitkufe in eine Ruhestellung wegklappbar ist, kann eine Beeinträchtigung des normalen Bedienungskomforts des Kinderwagens und insbesondere des Bewegungsfreiraums der den Kinderwagen führenden Person im wesentlichen vermieden werden.

Gemäß einem weiteren Aspekt der Erfindung wird ein Nachrüstsatz für die Anbringung wenigstens einer Gleitkufe zur Bildung eines erfindungsgemäßen Kinderwagens bereitgestellt, wobei der Nachrüstsatz wenigstens eine Gleitkufe und eine Tragvorrichtung zur Befestigung der wenigstens einen Gleitkufe an dem Kinderwagen aufweist.

Damit ist es erfindungsgemäß mit geringem Aufwand möglich, auch bereits im Einsatz befindliche Kinderwägen entsprechend auszugestalten und somit deren Bedienungskomfort wesentlich zu erhöhen. Der erfindungsgemäße Nachrüstsatz kann hierbei auch eines oder mehrere der oben im Zusammenhang mit den Unteransprüchen diskutierten Merkmale aufweisen, um die entsprechenden Vorteile zu ermöglichen.

Die Erfindung wird nachfolgend in Ausführungsbeispielen anhand der Figuren der Zeichnung näher erläutert. Es zeigt:
- Fig. 1: eine schematische Seitenansicht eines erfindungsgemäßen Kinderwagens;
- Fig. 2: eine halbseitige Draufsicht auf den erfindungsgemäßen Kinderwagen, wobei der Korb weggelassen wurde;
- Fig. 3: eine schematische Darstellung ähnlich der in Fig. 1, wobei die Gleitkufe zur Bildung einer Standfläche abgeklappt ist;
- Fig. 4: eine schematische Darstellung einer abgewandelten Ausführungsform eines erfindungsgemäßen Kinderwagens;
- Fig. 5: eine weitere Darstellung des Kinderwagens gemäß Fig. 4, wobei eine nachlaufende Standfläche von der Gleitkufe ausgestellt ist;
- Fig.6: eine Detaildarstellung einer speziellen Bauweise einer erfindungsgemäßen Gleitkufe;
- Fig. 7: eine perspektivische Darstellung der Radanordnung eines Kinderwagens, an welche eine Gleitkufe gemäß Fig. 6 mittels einer Tragvorrichtung an beide Achsen angekoppelt ist;
- Fig. 8: eine Detailansicht einer weiteren Bauweise der Gleitkufe, wobei die Gleitkufe in der Betriebsstellung vorliegt;
- Fig. 9: eine Darstellung der Gleitkufe gemäß Fig. 8, wobei diese in der Ruhestellung vorliegt;
- Fig. 10: eine weitere Ausführungsform der Gleitkufe in der Betriebsstellung;
- Fig. 11: eine Darstellung, welche die Gleitkufe gemäß Fig. 10 in der Ruhestellung zeigt;
- Fig. 12: eine weitere Ausgestaltungsweise der Gleitkufe, wobei hier ein Endlos-Zahnriemen an der Gleitkufe angeordnet ist;
- Fig. 13: eine weitere Ausführungsform des erfindungsgemäßen Kinderwagens, wobei hier die Gleitkufe gleichzeitig zum Halten einer Standfläche dient; und
- Fig. 14: eine weitere Ausgestaltungsweise des erfindungsgemäßen Kinderwagens, wobei hier ein Tragnetz am Kinderwagenkorb und einem Bügel angekoppelt ist, der die freien Enden zweier beabstandeter Gleitkufen verbindet.

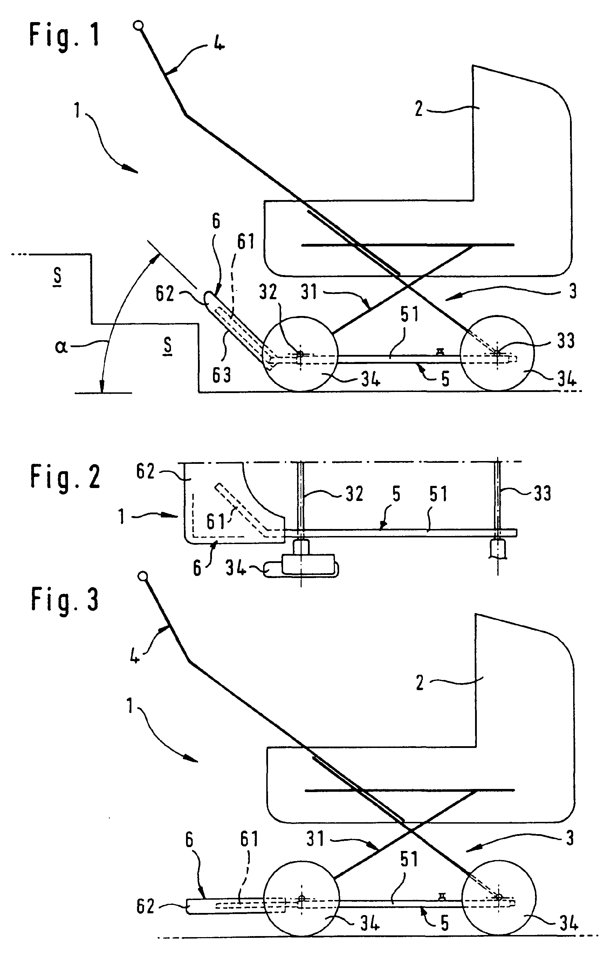

Gemäß der schematischen Darstellung in Fig. 1 weist ein Kinderwagen 1 einen Korb 2 zur Aufnahme des Kindes auf. Ferner enthält der Kinderwagen 1 ein Fahrwerk 3 und eine Schubstange 4, mittels welcher der Kinderwagen 1 geschoben wird.

Das Fahrwerk 3 weist ein Traggestänge 31 für den Korb 2 auf, welches mit Achsen 32 und 33 verbunden ist. An den beiden Achsen 32 und 33 sind insgesamt vier Räder 34 angeordnet.

Ferner weist der Kinderwagen 1 eine Tragvorrichtung 5 für eine flächig ausgebildete Gleitkufe 6 auf. Wie insbesondere aus Fig. 2 erkennbar ist, weist die Tragvorrichtung 5 zwei voneinander beabstandete Tragstangen 51 (eine davon ist dargestellt) auf, die über in dieser Figur nicht gezeigte Befestigungseinrichtungen an die Achsen 32 und 33 des Kinderwagens 1 angekoppelt sind.

Die Gleitkufe 6 weist eine metallene Abstützungen 61 auf, an welchen ein Gleitstück 62 befestigt ist. Das Gleitstück 62 weist eine Gleitfläche 63 auf.

Gemäß der Darstellung in Fig. 1 ist die Gleitkufe 6 hierbei in einem Winkel α von etwa 45 Grad zur Aufstandsfläche des Kinderwagens 1 festgestellt. Sie weist dabei eine Länge von ca. 280 mm auf, so daß sie eine Kante einer Stufe S überragt, welche hier eine Höhe von ca. 200 mm aufweist. Ein Endradius der Gleitkufe 6 ist dabei kleiner als 60 mm ausgebildet. Ferner ist die Gleitkufe 6 so angeordnet, daß sie sich im wesentlichen tangential vom Außenumfang der Räder 34 erstreckt. Diese weisen hier einen Durchmesser von wenigstens 195 mm auf.

Im Einsatz kann der Kinderwagen 1 an die Kante der Stufe S heran bewegt werden, bis die Gleitkufe 6 hieran anliegt. Dann wird der Kinderwagen 1 durch Ziehen an der Schubstange 4 gleitend über die Kante der Stufe S hinauf bewegt. Sobald die Gleitkufe 6 außer Eingriff mit der Stufenkante gelangt, übernehmen die Räder 34 wieder die Führung des Kinderwagens 1. Da die Gleitkufe 6 im wesentlichen tangential zum Außenumfang der Räder 34 angeordnet ist, ist hierbei ein im wesentlichen stetiger und somit ruckfreier Übergang erzielbar. Auf diese Weise können Stufen ohne weiteres überwunden werden, wobei keine Schrägstellung des Kinderwagens 1 auftritt. In der Gegenrichtung kann das Hinabgleiten des Kinderwagens 1 über die Stufe in analoger Weise erfolgen.

Wie aus Fig. 2 weiter erkennbar ist, ist das Gleitstück 62 in dieser Ausführungsform flächig ausgebildet, so daß es im wesentlichen die Breite des Kinderwagens 1 überspannt. Dieses flächige Gleitstück 62 kann gemäß der Darstellung in Fig. 3 durch Herabklappen in die Horizontale auch als Standfläche für mitzuführendes Gut, Taschen oder auch für ein weiteres Kind genutzt werden.

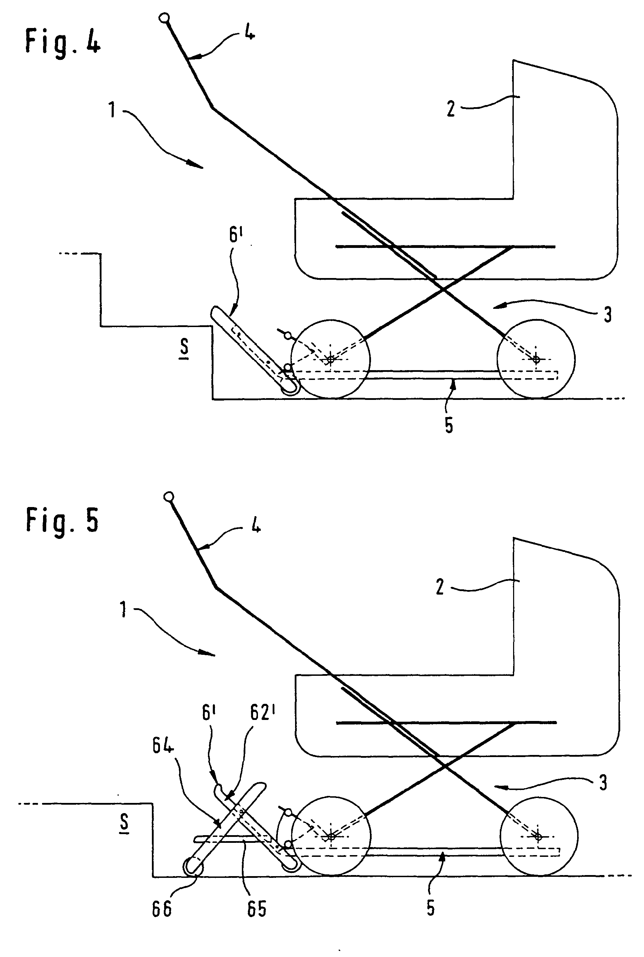

In den Fig. 4 und 5 ist eine abgewandelte Ausführungsform des erfindungsgemäßen Kinderwagens 1 gezeigt, welche sich von der in den Fig. 1 bis 3 gezeigten Bauweise im wesentlichen in der Gestalt der Gleitkufe unterscheidet. Eine Gleitkufe 6' ist hier so ausgebildet, daß sie in der Betriebsstellung zur Überwindung von Stufen im wesentlichen die gleiche Gestalt wie in der vorherigen Ausführungsform aufweist, was aus Fig. 4 ersichtlich ist. In einer weiteren Stellung gemäß der Darstellung in Fig. 5 kann ein Teil 64 der Gleitkufe 6' von einem Gleitstück 62' derart weg geklappt werden, daß auf diesen beiden Teilen eine Standfläche 65 gelagert werden kann. Das Teil 64 weist dabei wenigstens eine Rolle 66 auf, mittels der die Standfläche 65 nachläuft und Gewichtskräfte auf den Untergrund übertragen werden können, ohne daß hierdurch die Bewegungsfreiheit des Kinderwagens 1 wesentlich beeinträchtigt wäre.

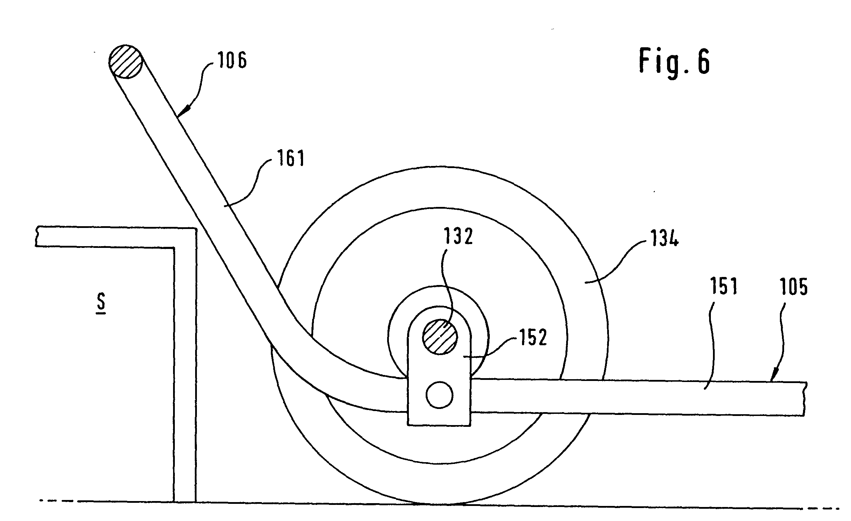

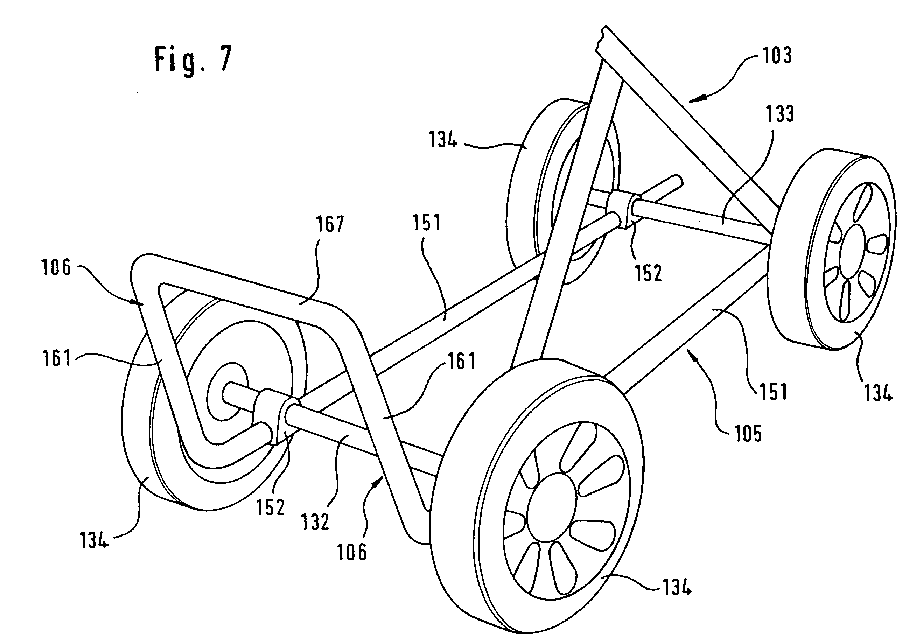

In den Fig. 6 und 7 ist eine weitere Ausführungsform eines Kinderwagens 1 gezeigt, wobei hier im Detail eine in ihrer Bauweise sehr einfach gehaltene Gleitkufenanordnung mit zwei Gleitkufen 106 gezeigt ist. Die Gleitkufen 106 sind integral mit Tragstangen 151 einer Tragvorrichtung 105 ausgebildet. Sie erstrecken sich als gebogener Endbereich tangential vom Außenumfang von Rädern 134 eines Fahrwerks 103 des Kinderwagens in Richtung von der Aufstandsfläche weg. Die Tragstangen 151 der Tragvorrichtung 105 sind hierbei an Achsen 132 und 133 des Fahrwerks 103 derart mittels Befestigungseinrichtungen 152 angekoppelt, daß eine Verstellung des Achsabstands möglich ist. Die Gleitkufen 106 sind hier aus metallenen Abstützungen 161 ausgebildet, deren freie Enden durch einen Bügel 167 miteinander verbunden sind.

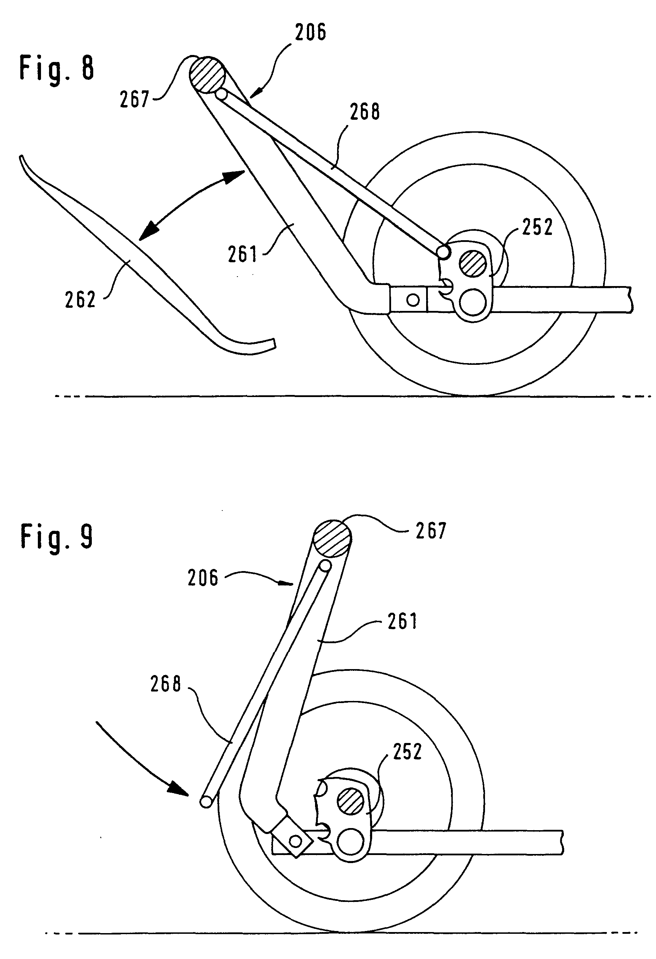

In den Fig. 8 und 9 ist eine weitere Ausführungsform des erfindungsgemäßen Kinderwagens 1 gezeigt, wobei hier lediglich eine Gleitkufe 206 im Detail dargestellt ist. Auch in dieser Ausführungsform sind zwei beabstandete Gleitkufen 206 mit Abstützungen 261 vorgesehen, von denen hier nur eine dargestellt ist. Die Abstützungen 261 sind ebenfalls über einen Bügel 267 miteinander verbunden. Darüber hinaus ist jeder Abstützung 261 eine Stützstange 268 zugeordnet, welche im Bereich der Achsen an einer Befestigungseinrichtung 252 fixierbar ist, wenn die Gleitkufen 206 in ihrer Betriebsstellung vorliegen. Diese lassen sich in dieser Ausführungsform aus der Betriebsstellung in die in Fig. 9 gezeigte Ruhestellung schwenken, wobei hierzu die Stützstangen 268 aus der Fixierung in der Befestigungseinrichtung 252 gelöst und weg geschwenkt werden. Der Kufenschwenkpunkt ist hierbei so gewählt, daß die Gleitkufe in ihrer Betriebsstellung eine weitestgehend angenäherte Tangente zum Radumfang bildet. Wie aus Fig. 8 ferner erkennbar ist, weisen die Gleitkufen 206 jeweils ein austauschbares Gleitstück 262 auf.

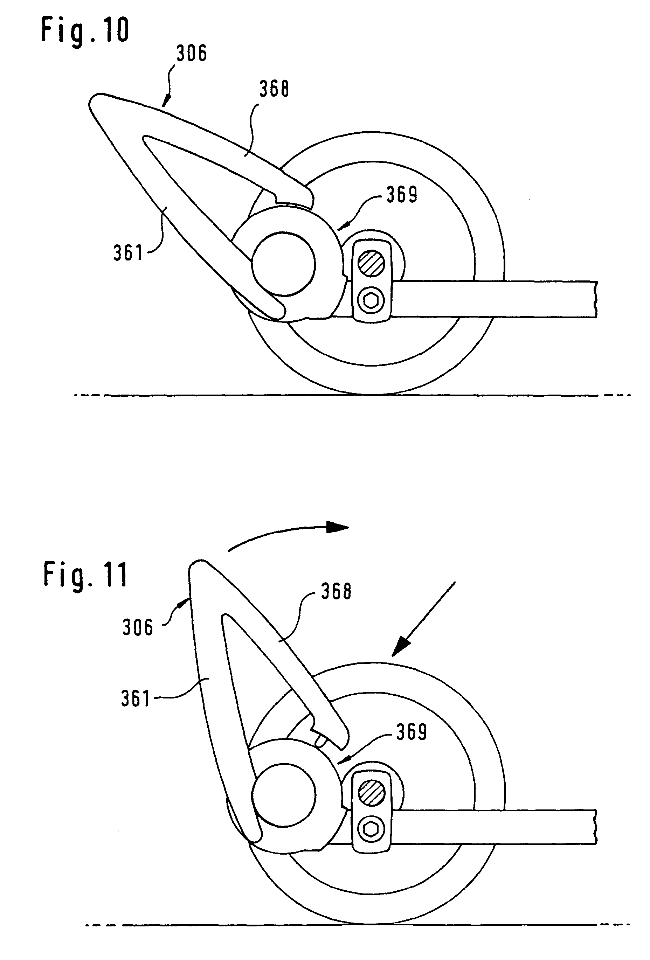

In den Fig. 10 und 11 ist noch eine weitere Ausgestaltungsweise von Gleitkufen 306 dargestellt. Hier sind Stützstangen 368 im wesentlichen starr an Abstützungen 361 der Gleitkufen 306 angekoppelt und rasten mit ihrem freien Ende an einer Schwenklagerung 369 derart ein, daß die Gleitkufen 306 in verschiedenen Winkellagen der Betriebsstellung, sowie in der Ruhestellung fixierbar sind.

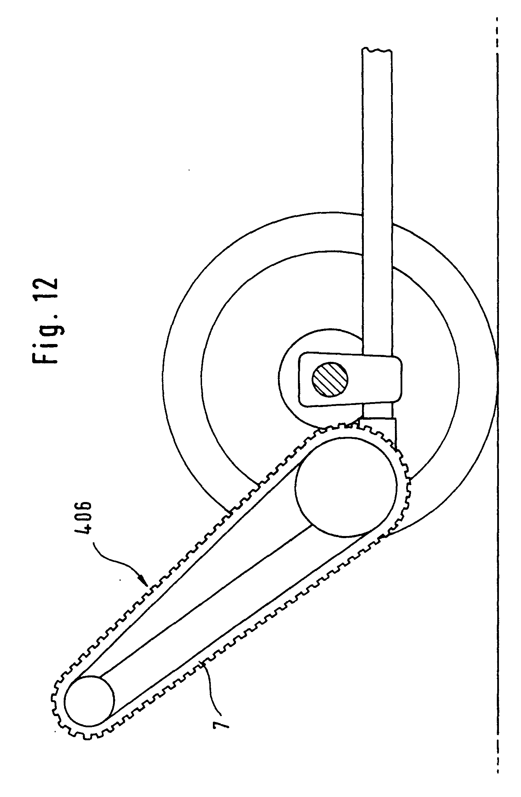

Fig. 12 zeigt eine weitere Ausführungsform der Erfindung, wobei hier eine Gleitkufe 406 so ausgebildet ist, daß diese mit einem umlaufenden Endlos-Laufriemen 7 mit außenseitiger Verzahnung versehen ist. Durch diesen Endlos-Laufriemen 7 wird eine Gleitbewegung auf einer Stufenkante im wesentlichen unterbunden, während der Endlos-Laufriemen 7 gleitend über die Außenoberfläche der Gleitkufen 406 abläuft. Damit können Farbspuren an den Stufenkanten durch Abrieb etc. vermieden werden.

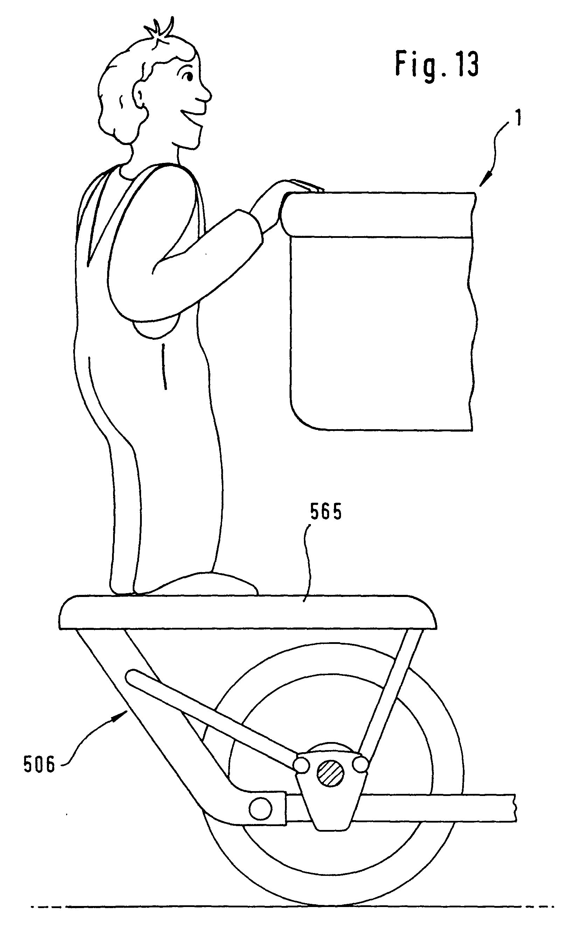

In Fig. 13 ist noch eine weitere Ausgestaltungsweise eines Kinderwagens 1 gezeigt, wobei hier eine weitere Bauweise einer Standfläche 565 realisiert ist. Auf dieser kann gemäß der Darstellung in dieser Figur ein weiteres Kind oder eine Tasche etc. mitgeführt werden. Die Standfläche 565 ist dabei zusammen mit Gleitkufen 506 aus der dargestellten Betriebsstellung in eine Ruhestellung schwenkbar.

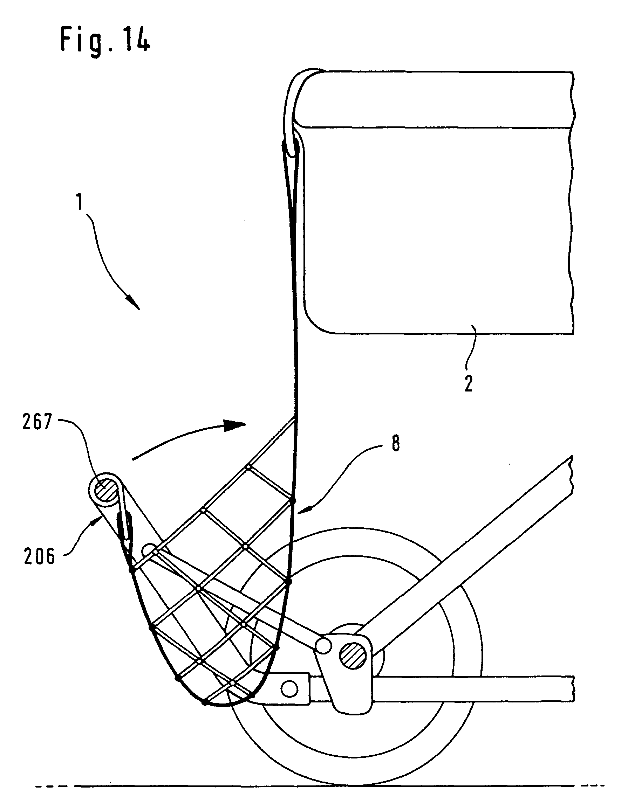

Fig. 14 zeigt noch eine weitere Bauweise des erfindungsgemäßen Kinderwagens, wobei hier ein Gepäcknetz 8 einerseits an den Korb 2 des Kinderwagens 1 und andererseits an einem Bügel 267 der Gleitkufen 206 festlegbar ist, so daß hier zusätzlicher Stauraum entsteht.

Wie aus den zahlreichen beschriebenen Ausführungsformen erkennbar ist, sind vielfältige Abwandlungen der Erfindung möglich.

So ist insbesondere eine Anpassung der Tragvorrichtung an unterschiedliche Bauweisen von Kinderwägen aller Art möglich. Ferner können die Räder auch einzeln am Traggestänge gelagert sein, wobei die Tragvorrichtung dann an geeigneten Stellen dieser Lagerung fixiert werden kann.

Anstelle eines Kufenpaars kann auch eine einzelne, mittig angeordnete Kufe treten. Die Gleitkufen können sowohl mit als auch ohne ein Gleitstück ausgebildet sein.

Ferner ist es auch möglich, daß der Laufriemen 7 motorisch angetrieben wird. Andererseits kann dem Laufriemen 7 auch ein Energiespeicher wie eine Feder zugeordnet sein, mittels dem z.B. beim Hinabfahren einer Treppe aufgenommene und gespeicherte Energie wieder zur Unterstützung einer Aufwärtsbewegung an einer Treppe genutzt werden kann.

Die Erfindung schafft somit einen Kinderwagen 1, der wenigstens eine Gleitkufe aufweist, welche vom Radumfang aus in Richtung einer Schubstange in einem Winkel von der Aufstandsfläche erstreckend angeordnet ist, wobei sie in ihrer Betriebsstellung in einem vorbestimmten Winkel α am Kinderwagen gehalten ist, und sich in dieser geneigten Stellung vollständig oberhalb der Aufstandsfläche des Kinderwagens befindet.

## Patentansprüche

1. Kinderwagen (1) mit einer Schubstange (4) und wenigstens zwei im Abstand voneinander auf einer Aufstandsfläche abgestützten Rädern (34; 134), und mit wenigstens einer Gleitkufe (6; 6'; 106; 206; 306; 406; 506), welche vom Radumfang aus in Richtung der Schubstange (4) in einem Winkel von der Aufstandsfläche erstreckend anordbar ist,
**dadurch gekennzeichnet,**
**daß** die wenigstens eine Gleitkufe (6; 6'; 106; 206; 306; 406; 506) in ihrer Betriebsstellung in einem vorbestimmten Winkel (α) im Bereich zwischen 30 Grad und 60 Grad am Kinderwagen (1) gehalten ist und sich in dieser geneigten Stellung vollständig oberhalb der Aufstandsfläche des Kinderwagens (1) befindet.

2. Kinderwagen nach Anspruch 1, **dadurch gekennzeichnet, daß** die wenigstens eine Gleitkufe (6; 6'; 106; 206; 306; 406; 506) in der Betriebsstellung in einem Winkel im Bereich zwischen 20° und 60°, vorzugsweise zwischen 35° bis 45° am Kinderwagen (1) gehalten ist.

3. Kinderwagen nach Anspruch 1 oder 2, **dadurch gekennzeichnet, daß** die wenigstens eine Gleitkufe (6; 6'; 106; 206; 306; 406; 506) eine Länge von wenigstens 250 mm und vorzugsweise zwischen 280 mm und 300 mm aufweist.

4. Kinderwagen nach einem der Ansprüche 1 bis 3, **dadurch gekennzeichnet, daß** die Räder (34; 134) durch eine Achsstange (32, 33; 132, 133) miteinander verbunden sind, wobei die wenigstens eine Gleitkufe (6; 6'; 106; 206; 306; 406; 506) mittels einer Tragvorrichtung (5; 105) an die Achsstange (32, 33; 132, 133) angekoppelt ist.

5. Kinderwagen nach Anspruch 4, **dadurch gekennzeichnet, daß** er zweiachsig ausgebildet ist, wobei die Tragvorrichtung (5; 105) an beide Achsstangen (32, 33; 132, 133) angekoppelt ist.

6. Kinderwagen nach Anspruch 4 oder 5, **dadurch gekennzeichnet, daß** die Tragvorrichtung (5; 105) in unterschiedlichen Relativstellungen am Kinderwagen (1) festlegbar ist.

7. Kinderwagen nach einem der Ansprüche 1 bis 6, **dadurch gekennzeichnet, daß** er zwei beabstandete Gleitkufen (6; 6'; 106; 206; 306; 406; 506) aufweist, deren freie Enden vorzugsweise durch einen Bügel (167; 267) verbunden sind.

8. Kinderwagen nach einem der Ansprüche 1 bis 7, **dadurch gekennzeichnet, daß** an der wenigstens einen Gleitkufe (6; 6'; 106; 206; 306; 406; 506) ein Gleitstück (62; 62'; 262) angeordnet ist, welches an einer vorzugsweise metallenen Abstützung (61; 161; 261) der Gleitkufe (6; 6'; 106; 206; 306; 406; 506) austauschbar befestigt ist.

9. Kinderwagen nach Anspruch 8, **dadurch gekennzeichnet, daß** das Gleitstück (62; 62'; 262) zumindest im Bereich einer Gleitfläche (63) aus einem verschleißfesten Kunststoff ausgebildet ist.

10. Kinderwagen nach einem der Ansprüche 1 bis 7, **dadurch gekennzeichnet, daß** die der Aufstandsfläche zugewandte Seite der wenigstens einen Gleitkufe (406) von einem Endlos-Laufriemen (7) abgedeckt ist.

11. Kinderwagen nach Anspruch 10, **dadurch gekennzeichnet, daß** der Endlos-Laufriemen (7) eine außenseitige Verzahnung aufweist.

12. Kinderwagen nach einem der Ansprüche 7 bis 11, **dadurch gekennzeichnet, daß** der Bügel (167; 267) als Halter für einen Rand eines vorzugsweise flexiblen Behältnisses (8) dient.

13. Kinderwagen nach einem der Ansprüche 7 bis 12, **dadurch gekennzeichnet, daß** eine Standfläche (65; 565) im Bereich der freien Enden der Gleitkufen gelagert ist.

14. Kinderwagen nach einem der Ansprüche 1 bis 13, **dadurch gekennzeichnet, daß** die wenigstens eine Gleitkufe (6; 6'; 206; 306; 406; 506) in eine Ruhestellung wegklappbar ist.

15. Nachrüstsatz für die Anbringung wenigstens einer Gleitkufe (6; 6'; 106; 206; 306; 406; 506) zur Bildung eines Kinderwagens (1) nach einem der Ansprüche 1 bis 14, mit wenigstens einer Gleitkufe (6; 6'; 106; 206; 306; 406; 506) und einer Tragvorrichtung (5; 105) zur Befestigung der wenigstens einen Gleitkufe (6; 6'; 106; 206; 306; 406; 506) an einem Kinderwagen (1).

16. Nachrüstsatz nach Anspruch 15, **dadurch gekennzeichnet, daß** er wenigstens eines der weiteren Merkmale gemäß den Ansprüchen 2 bis 14 aufweist.
